# EUROPEAN PATENT APPLICATION

(11) **EP 4 837 800 A1**
(43) Date of publication of application: **11.11.2026**
(21) Application number: 25174354.8
(22) Date of filing: 06.05.2025
(51) Int. Cl.: B60W 10/06, B60W 10/30, B60W 30/18, B60W 30/182, B60W 50/00, F01N 9/00

(54) **A COMPUTER SYSTEM COMPRISING PROCESSING CIRCUITRY CONFIGURED TO DETERMINE A TRAVEL PLAN FOR A VEHICLE TO TRAVEL FROM A FIRST LOCATION TO A SECOND LOCATION**

(71) Applicant: Volvo Truck Corporation, 405 08 Göteborg (SE)
(72) Inventor: Wilhelmsson, Martin, 423 39 Torslanda (SE); Stjernberg, Oscar, 411 35 Göteborg (SE); Gertzell, Alexander, 413 06 Göteborg (SE)
(74) Representative: Valea AB

(57) **Abstract**

The present disclosure relates to a computer system (400) comprising processing circuitry (402) configured to determine a travel plan for a vehicle (1) to travel from a first location to a second location, the vehicle (1) comprising an engine system (20) having an engine (20'), and a particulate filter (22) adapted to receive exhaust gas from the engine (20'), wherein the processing circuitry (402) is further configured to:
- identify an upcoming driving event of the vehicle (1), the upcoming driving event comprising following a route (50) from the first location to the second location;
- obtain driving event information for at least one previous driving event following the same route (50) which has previously been performed under predefined vehicle operating conditions;
- use the driving event information to determine the travel plan for the upcoming driving event;
- wherein the travel plan comprises at least one of the following: a regeneration plan associated with at least one regeneration event for the particulate filter (22) at at least one portion along the route, or a fuel-saving plan associated with at least one fuel-saving event during which an engine start-stop function is enabled at at least one portion along the route.

## Description

### TECHNICAL FIELD

The disclosure relates generally to determining a travel plan. In particular aspects, the disclosure relates to a computer system comprising processing circuitry configured to determine a travel plan for a vehicle to travel from a first location to a second location. The disclosure also relates to a method for determining a travel plan for a vehicle to travel from a first location to a second location. Moreover, the disclosure relates to a vehicle, a computer program product and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An engine system may comprise an engine and an exhaust gas aftertreatment system. The exhaust gas aftertreatment system may in turn comprise a particulate filter, such as a Diesel Particulate Filter (DPF), for capturing and reducing soot particles emitted in the exhaust gas. Over time, the filter may become saturated and require a regeneration process to burn off the accumulated soot. This regeneration may require the engine to stay running in order to maintain the high exhaust temperatures and flow necessary for effective cleaning. Moreover, vehicles are usually equipped with an engine start/stop function, which may help to save fuel and reduce emissions by automatically turning off the engine when it is necessary and restarting it when needed.

### SUMMARY

According to a first aspect of the disclosure, a computer system comprising processing circuitry configured to determine a travel plan for a vehicle to travel from a first location to a second location. The vehicle comprises an engine system having an engine, and a particulate filter adapted to receive exhaust gas from the engine. The processing circuitry is further configured to:
- identify an upcoming driving event of the vehicle, the upcoming driving event comprising following a route from the first location to the second location;
- obtain driving event information for at least one previous driving event following the same route which has previously been performed under predefined vehicle operating conditions;
- use the driving event information to determine the travel plan for the upcoming driving event;
- wherein the travel plan comprises at least one of the following: a regeneration plan associated with at least one regeneration event for the particulate filter at at least one portion along the route, or a fuel-saving plan associated with at least one fuel-saving event during which an engine start-stop function is enabled at at least one portion along the route.

The first aspect of the disclosure may seek to improve efficiency of an engine system. By using and analyzing the driving event information, it may be possible to identify a portion, which may be understood as a time window, that is preferable to perform a regeneration event or to activate the engine start-stop function, when determining a travel plan. A technical benefit may include improved engine efficiency.

Herein the term "use" may encompass a variety of examples for handling the driving event information. For example, it may refer to any one of the following: identify or collect or retrieve driving event information, for instance from a storage unit, such as a database, which may be located in the vehicle; receive driving event information which driving event information for instance has been transmitted from a transmitter not located in the vehicle. The driving event information for instance may have been collected and/or registered during or after the above-mentioned driving events following the same route which have previously been performed under determined operating conditions.

Optionally in some examples, including in at least one preferred example, the driving event information comprises at least one of the following vehicle operating parameters at at least one portion along the route: an engine power, a vehicle speed, the particulate filter's temperature, road characteristics information comprising an inclination of the road in the route, or a consecutive driving time at a vehicle speed higher than a predetermined value. By use of these operating parameters, a technical benefit may include that an appropriate travel plan can be determined.

Optionally in some examples, including in at least one preferred example, the processing circuitry is further configured to:
- identify a current vehicle operating condition;
- use the driving event information to determine the vehicle operating parameters at the at least one portion along the route for the current vehicle operating condition.

As such, the vehicle operating parameters may be determined for the current operating condition, instead of for the condition under which the previous driving event has been performed. A technical benefit may include that an appropriate travel plan can be determined.

Optionally in some examples, including in at least one preferred example, the current vehicle operating condition comprises at least one of the following parameters: a vehicle weight, a time of the day, or weather conditions.

Optionally in some examples, including in at least one preferred example, the vehicle operating parameters are determined using a machine-learning model. For instance, the driving event information may contain data related to the vehicle operating parameters when one more previous driving event following the same route which was previously performed under predefined vehicle operating conditions. These data may be saved and be used as training data to be fed to an appropriate machine-learning model, e.g., a neural network model. The machine-learning model may be configured to establish a correlation between the vehicle operating parameters and the operating conditions, such that when a current operating condition is identified, the vehicle operating parameters may be predicted.

Optionally in some examples, including in at least one preferred example, the processing circuitry is further configured to:
- identify that a condition for performing a regeneration event is fulfilled at the at least one portion along the route;
- plan the regeneration event at the identified portion;
- wherein the condition for performing the regeneration event is fulfilled if at least one of the following criteria is met:
   o an average engine power over a period of time exceeds an engine power threshold level;
   o a consecutive driving time at the vehicle speed higher than the predetermined value exceeds a consecutive drive time threshold level; or
   o the particulate filter's temperature exceeds a particulate filter temperature level.

A technical benefit may include that an appropriate portion for performing the regeneration event may be determined.

Optionally in some examples, including in at least one preferred example, the processing circuitry is further configured to:
- identify that a condition for performing a fuel-saving event is fulfilled at the at least one portion along the route;
- plan the fuel-saving event at the at the identified portion;
- wherein the condition for performing the fuel-saving event is fulfilled if the portion comprises a slope with a negative inclination, wherein a length of the slope surface exceeds a predetermined threshold level.

A technical benefit may include that an appropriate portion for performing the fuel-saving event may be determined.

Optionally in some examples, including in at least one preferred example, the processing circuitry is further configured to communicate the determined travel plan to a user via a user interface. For instance, the processing circuitry may cause the user interface to present the travel plan to the user.

According to a second aspect of the disclosure, a vehicle is provided. The vehicle comprises the computer system according to any examples of the first aspect of the disclosure. Technical benefits of the second aspect of the disclosure are largely analogous to the technical benefit of the first aspect of the disclosure.

According to a third aspect of the disclosure, a computer-implemented method for determining a travel plan for a vehicle to travel from a first location to a second location is provided. The vehicle comprises an engine system having an engine, and a particulate filter adapted to receive exhaust gas from the engine. The method comprises:
- identifying, by processing circuitry of a computer system, the upcoming driving event comprising following a route from the first location to the second location;
- obtaining, by the processing circuitry, driving event information for at least one previous driving event following the same route which has previously been performed under predefined vehicle operating conditions;
- using, by the processing circuitry, the driving event information to determine the travel plan for the upcoming driving event;
- wherein the travel plan comprises at least one of the following: a regeneration plan associated with at least one regeneration event for the particulate filter at at least one portion along the route, or a fuel-saving plan associated with at least one fuel-saving event during which an engine start-stop function is enabled at at least one portion along the route.

Technical benefits of the third aspect of the disclosure are largely analogous to the technical benefit of the first aspect of the disclosure.

Optionally in some examples, including in at least one preferred example, the driving event information comprises at least one of the following vehicle operating parameters at the at least one portion along the route: an engine power, a vehicle speed, the particulate filter's temperature, road characteristics information comprising an inclination of the road in the route, or a consecutive driving time at a vehicle speed higher than a predetermined value.

Optionally in some examples, including in at least one preferred example, the method further comprises:
- identifying, by the processing circuitry, a current vehicle operating condition;
- using, by the processing circuitry, the driving event information to determine the vehicle operating parameters at the at least one portion along the route for the current vehicle operating condition.

Optionally in some examples, including in at least one preferred example, the current vehicle operating condition comprises at least one of the following parameters: a vehicle weight, a time of the day, or weather conditions.

Optionally in some examples, including in at least one preferred example, the vehicle operating parameters are determined using a machine-learning model.

Optionally in some examples, including in at least one preferred example, the method further comprises:
- identifying, by the processing circuitry, that a condition for performing a regeneration event is fulfilled at the at least one portion along the route;
- planning, by the processing circuitry, the regeneration event at the identified portion;
- wherein the condition for performing the regeneration event is fulfilled if at least one of the following criteria is met:
   o an average engine power over a period of time exceeds an engine power threshold level;
   o a consecutive driving time at the vehicle speed higher than a predetermined value exceeds a consecutive drive time threshold level; or
   o the particulate filter's temperature exceeds a particulate filter temperature level.

Optionally in some examples, including in at least one preferred example, the method further comprises:
- identifying, by the processing circuitry, that a condition for performing a fuel-saving event is fulfilled at the at least one portion along the route;
- planning, by the processing circuitry, the fuel-saving event at the identified portion;
- wherein the condition for performing the fuel-saving event is fulfilled if the portion comprises a slope with a negative inclination, wherein a length of the slope surface exceeds a predetermined threshold level.

Optionally in some examples, including in at least one preferred example, the method further comprises communicating, by the processing circuitry, the determined travel plan to a user via a user interface.

According to a fourth aspect of the disclosure, a computer program product is provided. The computer program comprises program code for performing, when executed by the processing circuitry, the method of any of examples according to the third aspect.

According to a fifth aspect of the disclosure, a non-transitory computer-readable storage medium is provided. The computer-readable storage medium comprises instructions, which when executed by the processing circuitry, cause the processing circuitry to perform the method of any of examples according to the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** **is** a schematic side view of a vehicle according to an example;
**FIG. 2** and **FIG.** 3 are flow charts illustrating a method to determine a travel plan for a vehicle to **travel** from a first location to a second location;
**FIG. 4a** and **FIG. 4b** are flow charts illustrating optional actions of a method to determine a travel plan for a vehicle to travel from a first location to a second location;
**FIG. 5a** and **FIG. 5b** show examples of driving event information;
**FIG. 6** is a schematic diagram of an exemplary computer system for implementing methods disclosed herein.

### DETAILED DESCRIPTION

The detailed description set forth below provides information and examples of the disclosed technology with sufficient detail to enable those skilled in the art to practice the disclosure.

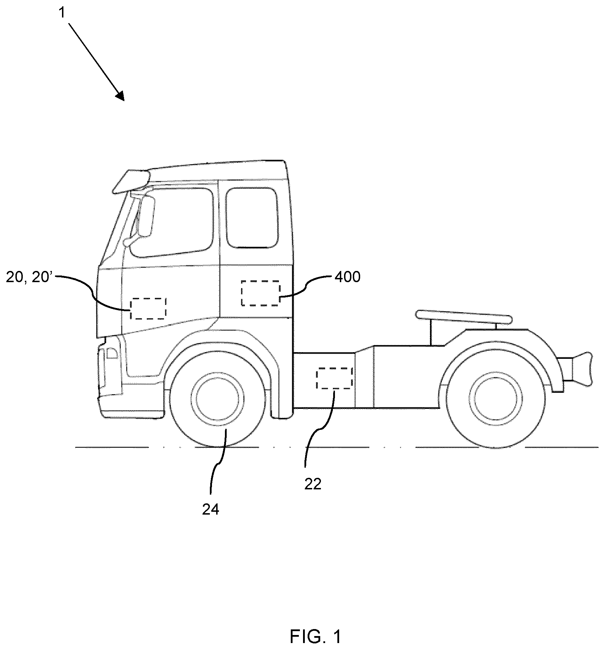

**FIG. 1** depicts a vehicle 1, which is exemplified by a truck. Even though a truck is shown, it shall be noted that the disclosure is not limited to this type of vehicle, but it may also be used for other vehicles, such as a bus, or construction equipment, e.g., a wheel loader or an excavator. The vehicle 100 may be an at least partly autonomous vehicle, or a human-driven vehicle.

The vehicle 1 comprises an engine system 20 that has an engine 20', preferably an internal combustion engine, configured to provide power for propelling the vehicle 1. The engine 20' may be of any suitable type, for instance a diesel engine or a gasoline engine. The engine system 20 further comprises a particulate filter 22 adapted to receive exhaust gas from the engine 20, in order to reduce harmful emissions, e.g. exhaust soot, to the environment. Depending on the type of the engine 20, the particulate filter 22 may be a diesel particulate filter, or a gasoline particulate filter. Over time, the particulate filter 22 may become saturated and may require regeneration so as to clean the particulate filter 22. This regeneration process may occur while driving. Moreover, it may require the engine 20 to stay running in order to maintain the high exhaust temperatures and flow necessary for effective cleaning. The vehicle 1 may comprise an engine start/stop function, which may help to save fuel and reduce emissions by automatically turning off the engine 20 when it is necessary and restarting it when needed. It may be realized that the regeneration process and the engine start/stop function cannot be activated simultaneously.

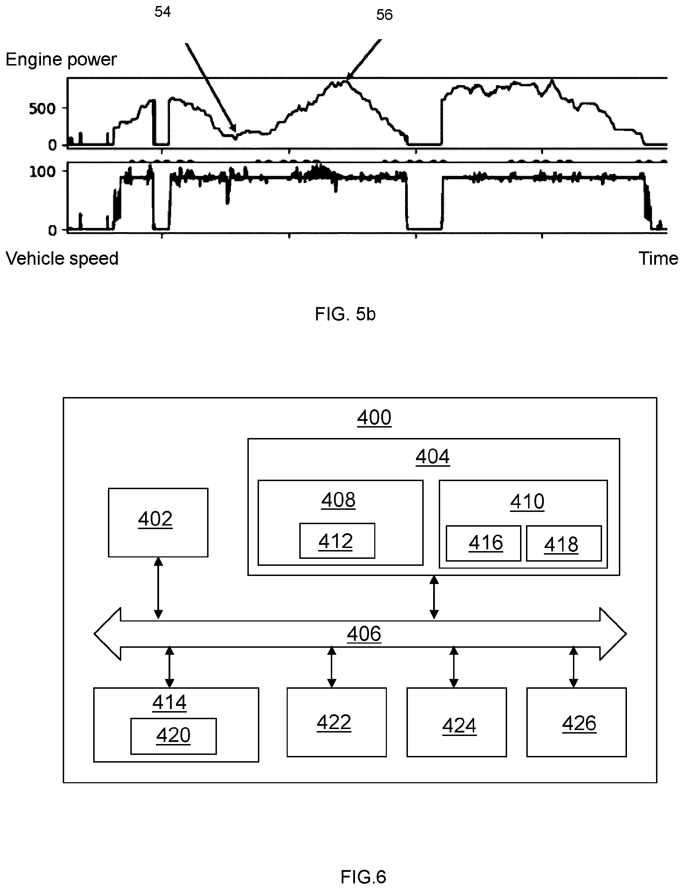

The vehicle 1 further comprises a computer system 400. The computer system 400 has processing circuitry 402 (see Fig. 6), which may also be referred to as a control unit. The processing circuitry of the computer system 400 may be configured to determine a travel plan using a method according to an example of the disclosure. Moreover, the computer system 400 may further comprise a communication unit for receiving various information, for instance, for receiving route information from a map data stored onboard and/or from a cloud server. In some examples, the vehicle 1 may further comprise a user interface which may be used to communicate or present information to a user.

When performing a driving event, the vehicle 1 may travel across various geometric locations and encounter diverse operating conditions. Certain conditions may be more favorable for facilitating a regeneration process, while others may better support engine start/stop operations. Consequently, it may be desirable to determine a travel plan in advance, prior to a trip.

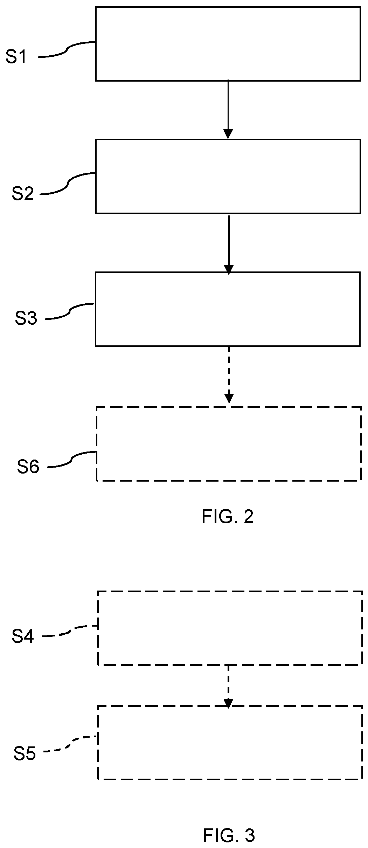

FIG. 2 show flows chart illustrating a method for determining a travel plan for a vehicle 1 to travel from a first location to a second location, according to an example. The travel plan may be communicated to a user through a user interface to provide guidance during travel. The travel plan may also be utilized for assisting motion planning and/or driving task planning for at least partly autonomous vehicles. The method may be performed by processing circuitry 402 of a computer system 400, such as the computer system 400 as shown in **FIG.1****.** The method comprises at least one of the actions listed in the following, which, unless otherwise indicated, may be taken in any suitable order:
S1: identifying the upcoming driving event comprising following a route from the first location to the second location. The driving event may be identified with help of information from??? one or more sensors of the navigation system (not shown) and/or on map information stored in the navigation system (not shown).
S2: obtaining driving event information for at least one previous driving event following the same route which has previously been performed under predefined vehicle operating conditions. The driving event information may be obtained from vehicles, which may be the own vehicle 1 and/or any other vehicles, that have previously performed the same driving events following the same route. Alternatively or additionally, the driving event information may also be obtained from computer simulation where a virtual vehicle has performed the same driving events a plurality of times. The driving route may have been created in the computer environment such that it may represent the same route from the real world. The driving events may have been performed a sufficient number of times, preferably that a plurality of different vehicle operating conditions has been covered. The information may be recorded each time a driving event has been carried out and may be saved in the form of data in a database.
S3: using the driving event information to determine the travel plan for the upcoming driving event.

The travel plan comprises at least one of the following: a regeneration plan associated with at least one regeneration event for the particulate filter 22 at at least one portion along the route 50, or a fuel-saving plan associated with at least one fuel-saving event during which an engine start-stop function is enabled at at least one portion along the route 50.

The method may further comprise an optional action S6: communicating, preferably presenting, the determined travel plan to a user via a user interface.

In some examples, the method may comprise the following actions as presented in **FIG. 3****:**
S4: identifying a current vehicle operating condition;
S5: using the driving event information to determine the vehicle operating parameters at the at least one portion along the route 50 for the current vehicle operating condition.

Preferably, the current vehicle operating condition comprises at least one of the following parameters: a vehicle weight, a time of the day, or weather conditions.

As such, the vehicle operating parameters may be determined for the current operating condition, instead of for the condition under which the previous driving event was performed.

If the current vehicle operating condition is same or similar as the condition of the previously performed driving event, the vehicle operating parameters may be associated with the same values of the operating parameters from the previously performed driving events. In the event that information from previously performed driving events is not associated with the same values of the vehicle operating parameters, the computer system 400 or the method of the present disclosure may interpolate between information from previously performed driving events. Alternatively, the vehicle operating parameters may be determined using a machine-learning model. For instance, the driving event information may contain data related to vehicle operating parameters when one more previous driving event following the same route which was previously performed under predefined vehicle operating conditions. These data may be saved and be used as training data to be fed to an appropriate machine-learning model, e.g., a neural network model. The machine-learning model may be configured to establish a correlation between the vehicle operating parameters and the operating conditions, such that when a current operating condition is identified, the vehicle operating parameters may be predicted.

Preferably, the driving event information comprises at least one of the following vehicle operating parameters at the at least one portion along the route: an engine power, a vehicle speed, the particulate filter's temperature, road characteristics information comprising an inclination of the road in the route, or a consecutive driving time at a vehicle speed higher than a predetermined value.

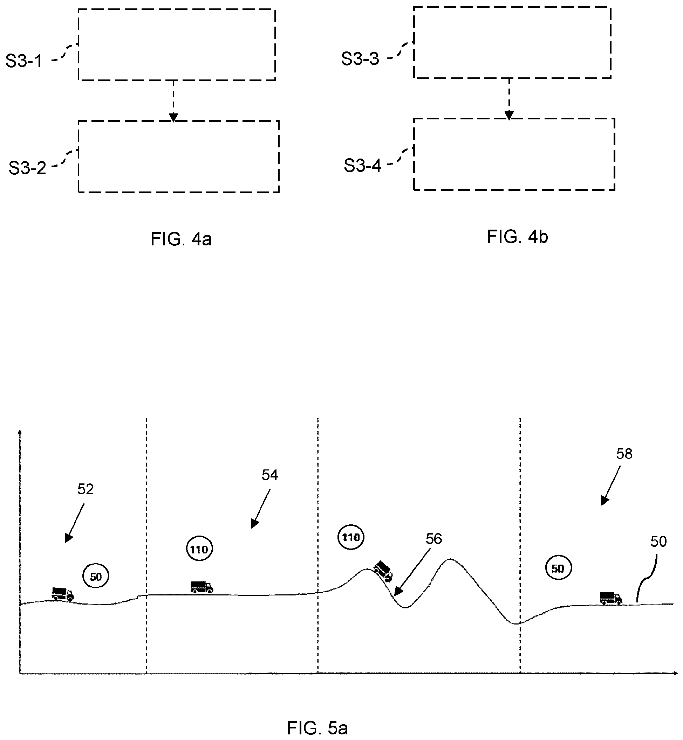

In some examples, the method may further comprise the following actions as presented in **FIG. 4a****:**
S3-1: identifying that a condition for performing a regeneration event is fulfilled at the at least one portion along the route.
S3-2: planning the regeneration event at the identified portion. The portion may refer to a specific time window along the route, and accordingly, planning the regeneration event may involve a start time and a complete time for the regeneration event.

The condition for performing the regeneration event is fulfilled if at least one of the following criteria is met:
o an average engine power over a period of time exceeds an engine power threshold level;
o a consecutive driving time at the vehicle speed higher than the predetermined value exceeds a consecutive drive time threshold level; or
o the particulate filter's temperature exceeds a particulate filter temperature level.

Depending on the type and specification of the vehicle, values of the above-mentioned threshold levels may vary. Irrespective of the value of these threshold levels, the above conditions may indicate that a regeneration event is preferred, and the computer system 400 may therefore plan a regeneration event at the identified portion.

In some examples, the method may further comprise the following actions as presented in **FIG. 4b****:**
S3-3: identifying that a condition for performing a fuel-saving event is fulfilled at the at least one portion along the route.
S3-4: planning the fuel-saving event at the identified portion.

The condition for performing the fuel-saving event is fulfilled if the portion comprises a slope with a negative inclination, wherein a length of the slope surface exceeds a predetermined threshold level. A slope with a negative inclination may imply that the vehicle 1 can be coasting on a downhill slope with the engine being deactivated, relying solely on gravity and momentum. Accordingly, this condition may indicate that a fuel-saving event is preferred, and the computer system 400 may therefore plan a fuel-saving event at the identified portion.

**FIG. 5a** and **FIG. 5b** illustrate examples of the driving event information. This information may be recorded and saved when a previous driving event following the same route 50 was performed under a vehicle operating condition. Accordingly, the driving event information may be used when a same driving event with an identical operating condition is identified.

The driving event information in **FIG. 5a** shows that the route 50 comprises four portions 52 54 56 58, whereby each portion 52 54 56 58 is associated with a recorded vehicle speed as the vehicle travels along the route 50. In other words, this information reflects how the vehicle's speed changes over time along route 50. Moreover, the driving event information comprises information about the road's altitude throughout route 50. Accordingly, the gradient of the road at each portion is indicated. Using this driving event information, the computer system 400 may identify that the vehicle 1 has been traveling at a relatively high speed, e.g.,110 km/h, for a period throughout the portion 54. Based on the information, the computer system 400 may determine that the particulate filter 22 is likely to become saturated after sustained driving at a vehicle speed of 110 km/h. Consequently, it may plan a regeneration event within portion 54. Moreover, the computer system 400 may identify negative road inclines in the portion 56, which could be advantageous for implementing a fuel-saving event. As a result, the computer system 400 may plan a fuel-saving event for the portion 56.

**FIG. 5b** illustrates another example of the driving event information, which comprises a recorded engine speed (upper part) and a vehicle speed (lower part) as the vehicle travels along the route 5. Using this driving event information, the computer system 400 may identify that the portion 56, as indicated by the arrow, may be preferred to plan a fuel-saving event, as the vehicle has previously coasted there with both engine power and vehicle speed gradually reduced to zero. Moreover, the computer system 400 may identify a gradual increase in engine power beginning at the start of portion 54. Accordingly, it may determine that portion 54 is the least suitable for a fuel-saving event. However, by calculating an average engine power over a time period within the portion 54, the computer system 400 may determine that this portion is favorable for a regeneration event. As a result, the computer system 400 may schedule a regeneration event during portion 54.

The above examples show that the determination is based on the driving event information gathered during the vehicle's operation under the same or similar condition. It shall be understood that, in some other examples where the driving event information from the previously performed driving events is not associated with the same values of the vehicle operating parameters, the computer system 400 or the method of the present disclosure may interpolate between information from previously performed driving events. Alternatively, the vehicle operating parameters may be determined for the current operating conditions using a machine-learning model, as described in paragraph 51. Moreover, although the examples illustrate the determination is made based on the parameters of vehicle speed, engine power, or road characteristics information, it may be sufficient for a skilled person to understand that other vehicle operating parameters, such as, a filter's temperature, may be recorded as driving event information and be used to support such decisions. For instance, it may be possible to record the particulate filter's temperature as the vehicle travels along the route 50. The computer system 400 may identify a portion where the particulate filter's temperature exceeds a particulate filter temperature level, and plan a regeneration event for this portion.

**FIG 4****.** illustrates a computer system 400, such as the vehicle on-board computer system 400, for performing the method. Computer system **400** is adapted to execute instructions from a computer-readable medium to perform these and/or any of the functions or processing described herein. The computer system 400 may be connected e.g., networked) to other machines in a LAN, an intranet, an extranet, or the Internet. While only a single device is illustrated, the computer system **400** may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit ECU, processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor DSP, an Application Specific Integrated Circuit ASIC, a Field Programmable Gate Array FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller, a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM, electrically erasable programmable read-only memory EEPROM, etc., and volatile memory **410** e.g., random-access memory RAM)), or any other medium which can be used to carry or store desired program code in the form of machine-executable instructions or data structures and which can be accessed by a computer or other machine with processing circuitry **402.** A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE or serial advanced technology attachment SATA, HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product e.g., readable storage medium storing the computer program **420** thereon, where at least a portion of a computer program **420** may be loadable e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE 1394 serial port, a Universal Serial Bus USB) port, an IR interface, and the like. The computer system **400** may include an output device interface **424** configured to forward output, such as to a display, a video display unit e.g., a liquid crystal display LCD or a cathode ray tube CRT. The computer system **400** may include a communications interface **426** suitable for communicating with a network as appropriate or desired.

Moreover, the present disclosure may be exemplified by any one of the below examples and combination of examples.
Example 1: A computer system (400) comprising processing circuitry (402) configured to determine a travel plan for a vehicle (1) to travel from a first location to a second location, the vehicle (1) comprising an engine system (20) having an engine (20'), and a particulate filter (22) adapted to receive exhaust gas from the engine (20'), wherein the processing circuitry (402) is further configured to:
   - identify an upcoming driving event of the vehicle (1), the upcoming driving event comprising following a route (50) from the first location to the second location;
   - obtain driving event information for at least one previous driving event following the same route (50) which has previously been performed under predefined vehicle operating conditions;
   - use the driving event information to determine the travel plan for the upcoming driving event;
   - wherein the travel plan comprises at least one of the following: a regeneration plan associated with at least one regeneration event for the particulate filter (22) at at least one portion along the route, or a fuel-saving plan associated with at least one fuel-saving event during which an engine start-stop function is enabled at at least one portion along the route.
Example 2: The computer system (400) according to claim 1, wherein the driving event information comprises at least one of the following vehicle operating parameters at at least one portion along the route: an engine power, a vehicle speed, the particulate filter's temperature, road characteristics information comprising an inclination of the road in the route, or a consecutive driving time at a vehicle speed higher than a predetermined value.
Example 3: The computer system (400) according to claim 2, wherein the processing circuitry (402) is further configured to:
   - identify a current vehicle operating condition;
   - use the driving event information to determine the vehicle operating parameters at the at least one portion along the route for the current vehicle operating condition.
Example 4: The computer system (400) according to claim 3, wherein the current vehicle operating condition comprises at least one of the following parameters: a vehicle weight, a time of the day, or weather conditions.
**Example** 5: The computer system (400) according to any one of claims 3-4, wherein the vehicle operating parameters are determined using a machine-learning model.
Example 6: The computer system (400) according to any one of claims 2-5, wherein the processing circuitry (402) is further configured to:
   - identify that a condition for performing a regeneration event is fulfilled at the at least one portion (54) along the route;
   - plan the regeneration event at the identified portion;
   - wherein the condition for performing the regeneration event is fulfilled if at least one of the following criteria is met:
      o an average engine power over a period of time exceeds an engine power threshold level;
      o a consecutive driving time at the vehicle speed higher than the predetermined value exceeds a consecutive drive time threshold level; or
      o the particulate filter (22)'s temperature exceeds a particulate filter temperature level.
Example 7: The computer system (400) according to any one of claims 2-6, wherein the processing circuitry (402) is further configured to:
   - identify that a condition for performing a fuel-saving event is fulfilled at the at least one portion along the route (50);
   - plan the fuel-saving event at the identified portion;
   - wherein the condition for performing the fuel-saving event is fulfilled if the portion (56) comprises a slope with a negative inclination, wherein a length of the slope surface exceeds a predetermined threshold level.
Example 8: The computer system (400) according to any one of claims 1-7, wherein the processing circuitry (402) is further configured to communicate the determined travel plan to a user via a user interface.
Example 9: A vehicle comprising the computer system (400) of any of claims 1-8.
Example 10: A computer-implemented method for determining a travel plan for a vehicle to travel from a first location to a second location, the vehicle comprising an engine system having an engine, and a particulate filter (22) adapted to receive exhaust gas from the engine, wherein the method comprises:
   - identifying (S1), by processing circuitry (402) of a computer system (400), the upcoming driving event comprising following a route from the first location to the second location;
   - obtaining (S2), by the processing circuitry (402), driving event information for at least one previous driving event following the same route which has previously been performed under predefined vehicle operating conditions;
   - using (S3), by the processing circuitry (402), the driving event information to determine the travel plan for the upcoming driving event;
   - wherein the travel plan comprises at least one of the following: a regeneration plan associated with at least one regeneration event for the particulate filter (22) at at least one portion along the route (50), or a fuel-saving plan associated with at least one fuel-saving event during which an engine start-stop function is enabled at at least one portion along the route (50).
Example 11: The method according to claim 10, wherein the driving event information comprises at least one of the following vehicle operating parameters at the at least one portion along the route (50): an engine power, a vehicle speed, the particulate filter's temperature, road characteristics information comprising an inclination of the road in the route (50), or a consecutive driving time at a vehicle speed higher than a predetermined value
Example 12: The method according to claim 11, further comprising:
   - identifying (S4), by the processing circuitry (402), a current vehicle operating condition;
   - using (S5), by the processing circuitry (402), the driving event information to determine the vehicle operating parameters at the at least one portion along the route (50) for the current vehicle operating condition.
Example 13: The method according to claim 12, wherein the current vehicle operating condition comprises at least one of the following parameters: a vehicle weight, a time of the day, or weather conditions.
Example 14: The method according to any one of claims 12-13, wherein the vehicle operating parameters are determined using a machine-learning model.
Example 15: The method according to any one of claims 11-14, further comprising:
   - identifying (S3-1), by the processing circuitry (402), that a condition for performing a regeneration event is fulfilled at the at least one portion (54) along the route (50);
   - planning (S3-2), by the processing circuitry (402), the regeneration event at the identified portion;
   - wherein the condition for performing the regeneration event is fulfilled if at least one of the following criteria is met:
      o an average engine power over a period of time exceeds an engine power threshold level;
      o a consecutive driving time at the vehicle speed higher than XXX exceeds a consecutive drive time threshold level; or
      o the particulate filter's temperature exceeds a particulate filter temperature level.
Example 16: The method according to any one of claims 11-15, further comprising:
   - identifying (S3-3), by the processing circuitry (402), that a condition for performing a fuel-saving event is fulfilled at the at least one portion (56) along the route (50);
   - planning (S3-4), by the processing circuitry (402), the fuel-saving event at the identified portion;
   - wherein the condition for performing the fuel-saving event is fulfilled if the portion comprises a slope with a negative inclination, wherein a length of the slope surface exceeds a predetermined threshold level.
Example 17: The method according to any one of claims 11-16, further comprising communicating (S6), by the processing circuitry (402), the determined travel plan to a user via a user interface.
Example 18: A computer program product comprising program code for performing, when executed by the processing circuitry (402), the method of any of claims 11-17.
Example 19: A non-transitory computer-readable storage medium comprising instructions, which when executed by the processing circuitry (402), cause the processing circuitry (402) to perform the method of any of claims 11-17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) configured to determine a travel plan for a vehicle (1) to travel from a first location to a second location, the vehicle (1) comprising an engine system (20) having an engine (20'), and a particulate filter (22) adapted to receive exhaust gas from the engine (20'), wherein the processing circuitry (402) is further configured to:
- identify an upcoming driving event of the vehicle (1), the upcoming driving event comprising following a route (50) from the first location to the second location;
- obtain driving event information for at least one previous driving event following the same route (50) which has previously been performed under predefined vehicle operating conditions;
- use the driving event information to determine the travel plan for the upcoming driving event;
- wherein the travel plan comprises at least one of the following: a regeneration plan associated with at least one regeneration event for the particulate filter (22) at at least one portion along the route, or a fuel-saving plan associated with at least one fuel-saving event during which an engine start-stop function is enabled at at least one portion along the route.

2. A vehicle comprising the computer system (400) of claim 1.

3. A computer-implemented method for determining a travel plan for a vehicle to travel from a first location to a second location, the vehicle comprising an engine system having an engine, and a particulate filter (22) adapted to receive exhaust gas from the engine, wherein the method comprises:
- identifying (S1), by processing circuitry (402) of a computer system (400), the upcoming driving event comprising following a route from the first location to the second location;
- obtaining (S2), by the processing circuitry (402), driving event information for at least one previous driving event following the same route which has previously been performed under predefined vehicle operating conditions;
- using (S3), by the processing circuitry (402), the driving event information to determine the travel plan for the upcoming driving event;
- wherein the travel plan comprises at least one of the following: a regeneration plan associated with at least one regeneration event for the particulate filter (22) at at least one portion along the route (50), or a fuel-saving plan associated with at least one fuel-saving event during which an engine start-stop function is enabled at at least one portion along the route (50).

4. The method according to claim 3, wherein the driving event information comprises at least one of the following vehicle operating parameters at the at least one portion along the route (50): an engine power, a vehicle speed, the particulate filter's temperature, road characteristics information comprising an inclination of the road in the route (50), or a consecutive driving time at a vehicle speed higher than a predetermined value .

5. The method according to any one of claims 3-4, further comprising:
- identifying (S4), by the processing circuitry (402), a current vehicle operating condition;
- using (S5), by the processing circuitry (402), the driving event information to determine the vehicle operating parameters at the at least one portion along the route (50) for the current vehicle operating condition.

6. The method according to claim 5, wherein the current vehicle operating condition comprises at least one of the following parameters: a vehicle weight, a time of the day, or weather conditions.

7. The method according to any one of claims 5-6, wherein the vehicle operating parameters are determined using a machine-learning model.

8. The method according to any one of claims 3-7, further comprising:
- identifying (S3-1), by the processing circuitry (402), that a condition for performing a regeneration event is fulfilled at the at least one portion (54) along the route (50);
- planning (S3-2), by the processing circuitry (402), the regeneration event at the identified portion;
- wherein the condition for performing the regeneration event is fulfilled if at least one of the following criteria is met:
o an average engine power over a period of time exceeds an engine power threshold level;
o a consecutive driving time at the vehicle speed higher than XXX exceeds a consecutive drive time threshold level; or
o the particulate filter's temperature exceeds a particulate filter temperature level.

9. The method according to any one of claims 3-8, further comprising:
- identifying (S3-3), by the processing circuitry (402), that a condition for performing a fuel-saving event is fulfilled at the at least one portion (56) along the route (50);
- planning (S3-4), by the processing circuitry (402), the fuel-saving event at the identified portion;
- wherein the condition for performing the fuel-saving event is fulfilled if the portion comprises a slope with a negative inclination, wherein a length of the slope surface exceeds a predetermined threshold level.

10. The method according to any one of claims 3-9, further comprising communicating (S6), by the processing circuitry (402), the determined travel plan to a user via a user interface.

11. A computer program product comprising program code for performing, when executed by the processing circuitry (402), the method of any of claims **11-17.**

12. A non-transitory computer-readable storage medium comprising instructions, which when executed by the processing circuitry (402), cause the processing circuitry (402) to perform the method of any of claims **11-17.**
